# EUROPEAN PATENT SPECIFICATION

(11) **EP 0 314 327 B1**
(45) Date of publication and mention of the grant of the patent: **05.01.1994**
(21) Application number: 88309411.2
(22) Date of filing: 07.10.1988
(51) Int. Cl.: C08G 77/60

(54) **Method of producing polysilane compounds**
Verfahren zur Herstellung von Polysilanverbindungen
Procédé de préparation de composés de polysilanes

(30) Priority: 09.10.1987 JP 255089/87
(43) Date of publication of application: 03.05.1989
(73) Proprietor: MITSUI PETROCHEMICAL INDUSTRIES, LTD., Tokyo 100 (JP)
(72) Inventor: Yokoyama, Keiichi, Iwakuni Yamaguchi (JP); Taniguchi, Katsuo, Iwakuni Yamaguchi (JP); Kiso, Yoshihisa, Iwakuni Yamaguchi (JP)
(74) Representative: Myerscough, Philip Boyd

(56) References cited:
- FR-A- 2 565 234
- JOURNAL OF THE AMERICAN CHEMICAL SOCIETY, vol. 108, July-August 1986, pages 4059-4066 ; C.T. AITKEN et al. :"Identification of some intermediates in the titanocene-catalyzed deshydrogenative coupling of primary organosilanes"
- JOURNAL OF ORGANOMETALLIC CHEMISTRY, vol. 279, 1985, pages C11-C13, Lausanne, CH ; C. AITKEN et al. :"Polymerization of primary silanes to linear polysilanes catalyzed by titanocene derivatives"
- CANADIAN JOURNAL OF CHEMISTRY, vol. 64, 1986, pages 1677-1679 ; C. AITKEN et al. :"Synthesis and structural characterization of an unusual silylzirconium hydride complex."
- Chimica-ein Wissensspeicher, Vol.1, VEB Deutscher Verlag für Grundstoffindusrtie, Leipzig 1981, page 239.

## Description

This invention relates to a method of producing a polysilane by the polymerization of a monomeric silane in the presence of an organometallic complex.

Polysilanes have been given much attention in recent years, for example, for use as a high performance resin such as a highly electroconductive resin, or a photosensitive resin such as a high resolution photoresist, or a precursor material for the production of silicon carbide fibers.

Polysilanes have previously been produced by the reaction of dichlorosilane with metallic sodium as shown below: 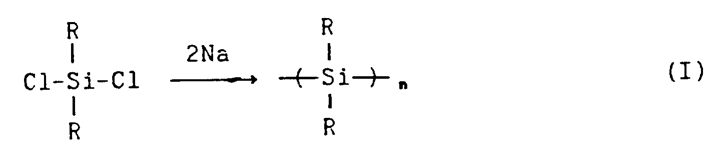
wherein each R represents hydrogen or a hydrocarbon group, provided that both R's are not hydrogen. However, as is apparent from the above formula, the method disadvantageously needs two moles of metallic sodium per mole of monomeric silane. The use of metallic sodium in large amounts is not feasible in the industrial production of polysilanes because, for example, sodium is readily combustible. Moreover, the thus produced polysilane tends to contain chloride ions which adversely affect the electrochemical properties of the polymer.

Thus there has been proposed in J. Organomet. Chem., 279, C11 (1985) and J. Am. Chem. Soc., 108, 4059 (1986) a method in which a phenylsilane is polymerized in the presence of an organotitanium complex, as shown below: 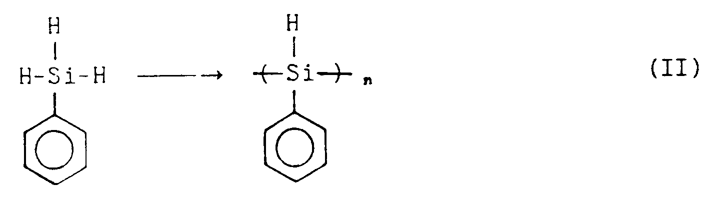
wherein n is about six. An organozirconium complex has also been found useful as a catalyst, as disclosed in Can. J. Chem., 64, 1677 (1986).

It is also known, as described in J. Organometal Chem., 55 (1973), C7-C8, that the heating of a monomeric hydrosilane in the presence of an organorhodium complex, (Ph₃P)₃RhCl, provides oligomers such as dimers or trimers of the hydrosilane together with disproportionation of the substituents of the silanes in a significant proportion. The disproportionation products contaminate the desired polysilane, but cannot be readily removed therefrom.

The present inventors have made an intensive investigation to obviate the problem involved in the production of polysilanes as described above, and have now found that an organocomplex of, as metal, Ni or Co is effective as a catalyst for the polymerization of a monomeric silane to produce a higher molecular weight polysilane with substantially no by-production of undesired disproportionation products.

The present invention provides a method of producing a polysilane which comprises polymerizing a monomeric silane of general formula 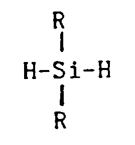
wherein each R independently represents a hydrocarbon group, in the presence of an organometallic complex of, as metal, Ni or Co.

The ligands in the complex may be, for example, halogen, hydrogen, alkyl, aryl, alkylsilane, arylsilane, olefin, alkylcarboxyl, arylcarboxyl, acetylacetonatoalkoxyl, aryloxy, alkylthio, arylthio, unsubstituted or substituted cyclopentadienyl, cyanoalkane, cyanoaromatic hydrocarbon, CN, CO, NO, alkylamine, arylamine, pyridine, alkylphosphine, arylphosphine, or alkylarylphosphine.

Among these are particularly preferred halogen, hydrogen, alkyl, aryl, olefin such as alkene or alkyne inclusive of ethylene, acetylene, methylacetylene, dimethylacetylene and π-allyl, unsubstituted or substituted cyclopentadienyl, CN, CO, alkylphosphine, arylphosphine, alkylarylphosphine, alkylenediphosphine, preferably of the general formula A₂-P(CH₂)mP-A₂ wherein A represents independently alkyl or aryl (e.g., phenyl) and m is 1, 2 or 3, cyclooctadiene and bipyridyl.

Most preferred ligands are hydrogen, chlorine, methyl, phenyl, ethylene, π-allyl, bipyridyl, triphenylphosphine, CO, dimethylenetetraphenylphosphine and trimethylenetetraphenylphosphine. The metal has these ligands in accordance with the permitted coordination number of the metal to form organometallic complexes.

More specific examples of the organometallic complexes usable in the invention are given below, in which COD represents cyclooctadiene; Cp, cyclopentadienyl; φ, phenyl; AN, acrylonitrile; dip, bipyridyl; acac, 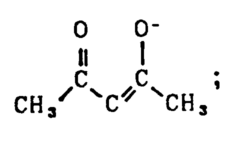
Py, pyridine; Me, methyl, Et, ethyl; and Bu, butyl.

### Ni Complexes:

Ni[φ₂P(CH₂)₃Pφ₂]Me₂,
Ni[φ₂P(CH₂)₃Pφ₂]Cl₂,
Ni(Pφ₃)₂Me₂,
Ni(Pφ₃)₂Cl₂,
Ni(PMe₂ φ)₂Me₂,
Ni(COD)₂,
NiEt₂,
Ni(CNMe)(CO)₃,
Ni(Cp)Cl₂,
Ni(Cp)I₂,
Ni(Cp)NO,
Ni(CF₃C≡CCF₃)(CO)₂,
Ni(Cp)(CN)₂,
Ni(Cp)(CO)I,
Ni(π-CH₂=CHCH₂)₂,
Ni(Cp)(CO)CF₃,
Ni(NCCH=CHCN)₂,
Ni(Cp)(CO)C₂F₅,
Ni(cyclooctatetraene)
Ni(Cp)(π-CH₂=CHCH₂),
Ni(EtNC)₂(CN)₂,
Ni(MeNC)₄,
Ni(Cp)(Pφ₃)Cl,
Ni(CH₂=CH₂)(PEt₃)₂,
Ni(Cp)(Pφ₃)Et,
Ni[φ₂P(CH₂)₂Pφ₂]BrMe,
Ni[φ₂P(CH₂)₃Pφ₂]BrMe,
Ni(CH₂=CH₂)(Pφ₃)₂,
Ni(AN)(Pφ₃),
(π-CH₂=CHCH₂NiCl)₂,
(π-CH₂=CHCH₂NiBr)₂,
[Ni(Cp)(CO)]₂,
[Ni(Cp)]₂HC≡CH,
[Ni(Cp)]₂HC≡C-CH₃,
[Ni(Cp)]₂CH₃-C≡C-CH₃,
Ni(dip)Cl₂,
Ni(dip)Br₂,
Ni(dip)ClMe,
Ni(dip)Me₂,
Ni(dip)Et₂,
NiCp₂,
Ni(CO)₄,
Ni(AN)₂,
Ni(acac)₂,
Ni[φ₂P(CH₂)₃Pφ₂]ClMe,
Ni[φ₂P(CH₂)₃Pφ₂]Br₂,
Ni[φ₂P(CH₂)₃Pφ₂]Et₂,
Ni[φ₂P(CH₂)₃Pφ₂]H₂,
Ni(Pφ₃)₂ClMe,
Ni(Pφ₃)₂HMe.

### Co Complexes:

Co(Pφ₃)₂Me₂,
Co(Pφ₃)₂Cl₂,
Co₂(CO)₈,
Co[φ₂P(CH₂)₂Pφ₂]Me₂,
Co(Pφ₃)₂Br₂,
Co(Pφ₃)₂BrMe,
Co(Pφ₃)₂ClMe,
Co(Pφ₃)₂Et₂,
Co[φ₂P(CH₂)₃Pφ₂]Me₂,
Co[φ₂P(CH₂)₂Pφ₂]ClMe,
Co[φ₂P(CH₂)₃Pφ₂]Cl₂,
Co[φ₂P(CH₂)₃Pφ₂]ClMe,
Co(CO)₄Me,
Co(Cp)Cl₂,
Co(Cp)Me₂,
Co(π-CH₂=CHCH₂)(CO)₃,
Co(Cp)(CO)₂,
Co(Cp)₂,
[Co(Cp)₂]Br₃,
[Co(Cp)₂]Cl,
Co(Pφ₃)(CO)₃Me,
Co(Pφ₃)₂H₂,
Co(Pφ₃)₂Br₂.

In particular, the following complexes are preferred in the invention:
Ni[φ₂P(CH₂)₂Pφ₂]Me₂,
Ni[φ₂P(CH₂)₃Pφ₂]Me₂,
Ni[φ₂P(CH₂)₃Pφ₂]Cl₂,
Ni(dip)Me₂,
Ni(Pφ₃)₂Me₂,
Ni(PMe₂φ)₂Me₂, and
Co(Pφ₃)₂Me₂.

Preferably, the monomeric silane is dialkylsilane, diarylsilane or alkylarylsilane, in which the alkyl has from 1 to 10 carbon atoms and the aryl preferably has from from 6 to 14 carbon atoms, for example phenyl, a phenylalkyl (e.g., benzyl or phenethyl) or an alkylphenyl (e.g., tolyl or xylyl).

The monomeric silane used in the invention may be exemplified by dialkyl silanes such as dimethylsilane, methylethylsilane, diethylsilane, methyl-n-propylsilane, methylisopropylsilane, ethyl-n-propylsilane, ethylisopropylsilane, diisopropylsilane, di-n-butylsilane or di- n-pentylsilane; alkyl aryl silanes such as methylphenylsilane, ethylphenylsilane; or diaryl silanes such as diphenylsilane, phenyl-o-tolylsilane, phenyl-p-tolylsilane, phenyl-m-tolylsilane or phenyl-2,4-dimethylphenylsilane. The monomeric silane may be used singly or as a mixture of two or more.

Preferred monomeric silanes used in the invention are methylphenylsilane, diphenylsilane and ethylphenylsilane. Methylphenylsilane and diphenylsilane are the most preferred.

According to the invention, the polymerization of the monomeric silane in the presence of a Ni or Co organometallic complex as described above as a catalyst provides a polysilane either of linear or branched structure. The structure of the polysilane can be determined by proton magnetic resonance spectrometry, ultraviolet absorption spectrometry and mass spectrometry.

The linear polysilane may be represented by the structural unit: 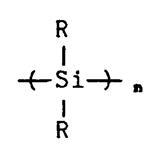
wherein R is as defined above and n is an integer of not less than 2, usually from 2 to 20. In many cases, n is from 3 to 7, determined from an analysis of the products obtained.

The branched polysilane has a silane branch through a Si-Si bond in the above formula. An exemplified polysilane of the branched structure is: 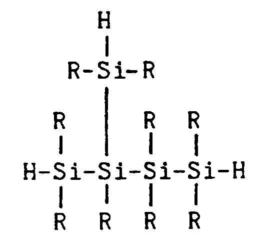
In addition to the linear or branched polysilanes, it is possible that a cyclic polysilane is produced in part, which may be represented by the formula: 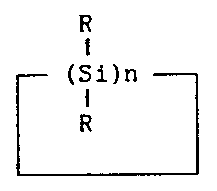
In the method of the invention, the polymerization of the monomeric silane is usually carried out at a temperatures of from about -20°C to about 80°C, preferably from about 20°C to about 50°C. The reaction time is generally from about 10 minutes to 2 days, and preferably from about 1 hour to 1 day. It largely depends upon the reaction temperature employed.

Usually the reaction is carried out in the absence of a solvent, but it may be carried out in the presence of an inert solvent if necessary. The solvent usable includes, for example, aromatic hydrocarbons such as benzene or toluene, ethers such as methyl ethyl ether, diethyl ether, tetrahydrofuran or dioxane, acid amides such as dimethylformamide, or acid esters such as ethyl acetate or butyl acetate.

The Ni or Co metal complex as a catalyst is usually used in an amount of from 0.0001 mole to 0.5 moles, preferably from 0.005 moles to 0.05 moles, per mole of the monomeric or oligomeric silane.

It is desirable that the reaction be carried out under an inert gas atmosphere such as nitrogen or argon. The progress of the reaction is confirmed by evolution of hydrogen gas from the reaction mixture.

According to the invention, the monomeric silane polymerizes readily in the presence of a catalytic or very small amount of an organometallic complex of Ni or Co, thereby to provide a polysilane in a high yield with substantially no by-production of undesired disproportionation products. The catalyst used may be recovered from the reaction mixture, if desired.

The invention is now further described in the following Examples.

### Example 1

### (Catalyst used: Ni[φ₂P(CH₂)₃Pφ₂]Me₂)

To a suspension of 0.13 g (0.24 millimole) of Ni[φ₂P(CH₂)₃Pφ₂]Cl₂ in ether (1 ml) were added dropwise 0.5 ml of an ether solution of methyl lithium (1 mole/l, 0.5 millimole) at -20°C under a nitrogen atmosphere, and then the mixture was raised to 0°C, followed by stirring over 1 hour. During the stirring, the red brownish organonickel complex crystals were dissolved, and then solids preciptated out, to provide a yellow suspension in which a dimethyl complex, Ni[φ₂P(CH₂)₃Pφ₂]Me₂ produced was dissolved.

0.5 ml of the suspension was taken out with a syringe and added to methylphenylsilane at room temperature. The amount of the catalyst used was 0.01 mole per mole of phenylsilane used.

After the reaction over 5 hours, low temperature boiling substances were removed by distillation under reduced pressure, to provide the product polysilane. The yield was 22% based on the methylphenylsilane used.

### Example 2

The polymerization of methylphenylsilane was carried out using the catalyst Ni[φ₂P(CH₂)₂Pφ₂]Me₂ as shown in Table 1 in an amount of 0.01 mole per mole of methylphenylsilane used and otherwise in the same manner as in Example 1. The yields of the polysilanes obtained in Examples 1 and 2 are shown in Table 1.

**Table 1**

| Examples | Catalysts Used | Yields (%) |
|---|---|---|
| 1 | Ni[φ₂P(CH₂)₃Pφ₂]Me₂ | 22 |
| 2 | Ni[φ₂P(CH₂)₂Pφ₂]Me₂ | 50 |

## Claims

1. A method of producing a polysilane which comprises polymerizing a monomeric silane of general formula 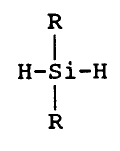 wherein each R independently represents a hydrocarbon group, in the presence of an organometallic complex of, as metal, Ni or Co.

2. A method according to claim 1 wherein the organometallic complex has ligands selected from halogen, hydrogen, alkyl, aryl, alkylsilane, arylsilane, olefin, alkylcarboxyl, arylcarboxyl, acetylacetonatoalkoxyl, aryloxy, alkylthio, arylthio, unsubstituted or substituted cyclopentadienyl, cyanoalkane, cyanoaromatic hydrocarbon, CN, CO, NO, alkylamine, arylamine, pyridine, alkylphosphine, arylphosphine or alkylarylphosphine, in accordance with the permitted coordination number of the metal.

3. A method according to claim 2 wherein the organometallic complex has ligands selected from halogen, hydrogen, alkyl, aryl, olefin, cyclopentadienyl, CN, CO, alkylphosphine, arylphosphine, alkylarylphosphine, alkylenediphosphine, cyclooctadiene and bipyridyl.

4. A method according to claim 1 wherein the organo-metallic complex is Ni[φ₂P(CH₂)₂Pφ₂]Me₂, Ni[φ₂P(CH₂)₃Pφ₂]Me₂, Ni[φ₂P(CH₂)₃Pφ₂]Cl₂, Ni(dip)Me₂, Ni(Pφ₃)₂Me₂, Ni(PMe₂φ)₂Me₂, Co(Pφ₃)₂Me₂ wherein φ represents phenyl, Me represents methyl and dip represents bipyridyl.

5. A method according to any one of the preceding claims wherein the organometallic complex is used in an amount of from 0.0001 mole to 0.5 moles per mole of the monomeric silane.

6. A method according to any one of claims 1 to 5 wherein the monomeric silane is methylphenylsilane.

## Patentansprüche

1. Verfahren zur Herstellung eines Polysilans, umfassend das Polymerisieren eines monomeren Silans der allgemeinen Formel 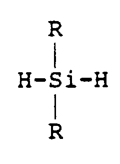 in der jedes R unabhängig eine Kohlenwasserstoffgruppe bedeutet, in Gegenwart eines Organometallkomplexes von Ni oder Co als Metall.

2. Verfahren nach Anspruch 1, wobei der Organometallkomplex Liganden hat, ausgewählt aus Halogen, Wasserstoff, Alkyl, Aryl, Alkylsilan, Arylsilan, Olefin, Alkylcarboxyl, Arylcarboxyl, Acetylacetonatoalkoxyl, Aryloxy, Alkylthio, Arylthio, unsubstituiertem oder substituiertem Cyclopentadienyl, Cyanoalkan, cyanoaromatischem Kohlenwasserstoff, CN, CO, NO, Alkylamin, Arylamin, Pyridin, Alkylphosphin, Arylphosphin oder Alkylarylphosphin, in Übereinstimmung mit der zulässigen Coordinationszahl des Metalls.

3. Verfahren nach Anspruch 2, wobei der Organometallkomplex Liganden hat, ausgewählt aus Halogen, Wasserstoff, Alkyl, Aryl, Olefin, Cyclopentadienyl, CN, CO, Alkylphosphin, Arylphosphin, Alkylarylphosphin, Alkylendiphosphin, Cyclooctadien und Bipyridyl.

4. Verfahren nach Anspruch 1, wobei der Organometallkomplex Ni[φ₂P(CH₂)₂Pφ₂]Me₂, Ni[φ₂P(CH₂)₃Pφ₂]Me₂, Ni[φ₂P(CH₂)₃Pφ₂]Cl₂, Ni(dip)Me₂, Ni(Pφ₃)₂Me₂, Ni(PMe₂φ)₂Me₂, Co(Pφ₃)₂Me₂ ist, wobei φ Phenyl bedeutet, Me Methyl bedeutet und dip Bipyridyl ist.

5. Verfahren nach einem der vorangehenden Ansprüche, wobei der Organometallkomplex in einer Menge von 0,0001 mol bis 0,5 mol pro Mol monomeres Silan verwendet wird.

6. Verfahren nach einem der Ansprüche 1 bis 5, wobei das monomere Silan Methylphenylsilan ist.

## Revendications

1. Procédé de préparation d'un polysilane, qui comporte la polymérisation d'un silane monomère de formule générale 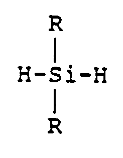 dans laquelle chaque R représente indépendamment un groupe hydrocarboné,
en présence d'un complexe organométallique de Ni ou de Co, en tant que métal.

2. Procédé conforme à la revendication 1, dans lequel le complexe organométallique comporte des ligands choisis parmi les atomes d'halogène et d'hydrogène, les groupes alkyles, aryles, les alkylsilanes, les arylsilanes, les oléfines, les groupes alkylcarboxyles, arylcarboxyles, acétylacétonato, alkoxy, aryloxy, alkylthio, arylthio, cyclopentadiényle substitué ou non, les cyanoalcanes, les hydrocarbures cyano-aromatiques, CN, CO, NO, les alkylamines, les arylamines, la pyridine, les alkylphosphines, les arylphosphines et les alkylarylphosphines, selon l'indice de coordinence que peut prendre le métal.

3. Procédé conforme à la revendication 2, dans lequel le complexe organométallique comporte des ligands choisis parmi les atomes d'halogène et d'hydrogène, les groupes alkyles, aryles, les oléfines, le groupe cyclopentadiényle, CN, CO, les alkylphosphines, les arylphosphines, les alkylarylphosphines, les alkylènediphosphines, le cyclooctadiène et le bipyridyle.

4. Procédé conforme à la revendication 1, dans lequel le complexe organométallique est :
Ni[Φ₂P(CH₂)₂PΦ₂]Me₂, Ni[Φ₂P(CH₂)₃PΦ₂]Me₂, Ni[Φ₂P(CH₂)₃PΦ₂]Cl₂, Ni(dip)Me₂, Ni(PΦ₃)₂Me₂, Ni(PMe₂Φ)₂Me₂, ou Co(PΦ₃)₂Me₂,
où Φ représente un groupe phényle, Me représente un groupe méthyle et dip représente un groupe bipyridyle.

5. Procédé conforme à l'une des revendications précédentes, dans lequel on utilise le complexe organométallique en une quantité de 0,0001 mole à 0,5 mole par mole de silane monomère.

6. Procédé conforme à l'une des revendications 1 à 5, dans lequel le silane monomère est du méthylphénylsilane.
